Europäisches Patentamt

European Patent Office

Office européen des brevets

(11) Veröffentlichungsnummer : **0 073 496**
**B1**

(12) **EUROPÄISCHE PATENTSCHRIFT**

(45) Veröffentlichungstag der Patentschrift :
24.04.85

(21) Anmeldenummer : 82107888.8

(22) Anmeldetag : 27.08.82

(51) Int. Cl.⁴ : **A 47 J 31/00, A 47 J 31/24**

(54) **Maschine zum Brühen von zwei Arten von Kaffee.**

(30) Priorität : 27.08.81 DE 3133903

(43) Veröffentlichungstag der Anmeldung :
09.03.83 Patentblatt 83/10

(45) Bekanntmachung des Hinweises auf die Patenterteilung : 24.04.85 Patentblatt 85/17

(84) Benannte Vertragsstaaten :
AT CH FR GB IT LI NL

(56) Entgegenhaltungen :
DE-B- 1 243 359
DE-B- 2 922 446
DE-C-   625 857
FR-A- 2 368 251
US-A- 2 796 018
US-A- 3 824 914
US-A- 4 137 833

(73) Patentinhaber : **Patzner GmbH + Co.**
**Buchener Strasse 15**
**D-6990 Bad Mergentheim (DE)**

(72) Erfinder : **Lessack, Franz**
**Neue Lindenstrasse 25**
**D-6990 Edelfingen (DE)**

(74) Vertreter : **Reinländer & Bernhardt Patentanwälte**
**Orthstrasse 12**
**D-8000 München 60 (DE)**

## Beschreibung

Die Erfindung betrifft eine Maschine zum Brühen von zwei Arten von Kaffee unter verschiedenen Drücken.

Mit einer solchen bekannten Maschine (Siehe US-A-4 137 833) wird Kaffee unter niedrigem Druck, z. B. 0,4 Bar (Normalkaffee) und Kaffee unter hohem Druck, z. B. 10 Bar (Espresso) bereitet. Bei der bekannten Maschine ist ein Heißwasserkessel vorgesehen, in dem für den Hochdruckkaffee ein Wärmeaustauscher angeordnet ist, dem eine Druckpumpe vorgeschaltet und ein Steuerventil nachgeschaltet ist, dem eine Brüharmatur für den Hochdruckkaffee folgt. Die Zumessung des Kaltwassers für den Hochdruckkaffee erfolgt dabei mittels eines Durchflußmengenmessers. Ein Dosierbehälter für den Niederdruckkaffee ist in dem Heißwasserkessel angeordnet und diesem Dosierbehälter folgt eine gesonderte Brüharmatur für den Niederdruckkaffee. Diese beiden Armaturen stellen einen hohen, also kostenungünstigen Aufwand dar une erfordern darüber hinaus zusätzlichen Platz, der zu einer größeren Breite der Maschine führt.

Der Erfindung liegt die Erkenntnis zugrunde, daß beim Betrieb einer solchen Maschine beide Kaffeearten nicht in der gleichen Menge benötigt werden, d. h. die eine Kaffeeart zu anderen Zeiten als die andere Kaffeeart bereitet werden können.

Der Erfindung liegt die Aufgabe zugrunde, eine Maschine zum Brühen von zwei Arten von Kaffee zu schaffen, die kostengünstig und platzsparend ist. Gelöst wird diese Aufgabe durch die Merkmale des Anspruchs 1. Weiterbildungen der Erfindung sind in den Unteransprüchen angegeben.

Bei der erfindungsgemäßen Maschine genügt eine Brüharmatur zum Bereiten der zwei Arten von Kaffee, was die Wirtschaftlichkeit der Maschine wesentlich erhöht.

Zum Bereiten des Hochdruckkaffees wird bei der Ausbildung mit der mit dem Dosierbehälter verbundenen Druckpumpe ein gesondertes Dosiergerät nicht benötigt, d. h. die Dosierungen für den Niederdruckkaffee und für den Hochdruckkaffee erfolgen in demselben Behälter, was den technischen Aufwand der Maschine weiter verringert. In der Regel wird dabei die Dosierung für den Hochdruckkaffee im Kaltwasserbereich durchgeführt, weil die Pumpe keine hohen Temperaturen verträgt. Es ist aber möglich, dem kalten Wasser für die Dosierung Heißwasser beizumischen, womit der Druckpumpe nicht kaltes Wasser, sondern Mischwasser mit einer Temperatur, die der Pumpe nicht schädlich ist, zugeführt wird. Dadurch kann die Baugröße des Wärmetauschers verringert werden, weil in dem der Druckpumpe nachgeschalteten Wärmetauscher das Wasser nurmehr um eine geringere Temperaturdifferenz aufgeheizt werden muß.

Die gemeinsame Verwendung des Dosierbehälters 2 zum Bereiten von Niederdruckkaffee und Hochdruckkaffee ermöglicht auch die Verwendung einer gemeinsamen Steuerschaltung, was eine weitere Verringerung des Aufwands bedeutet.

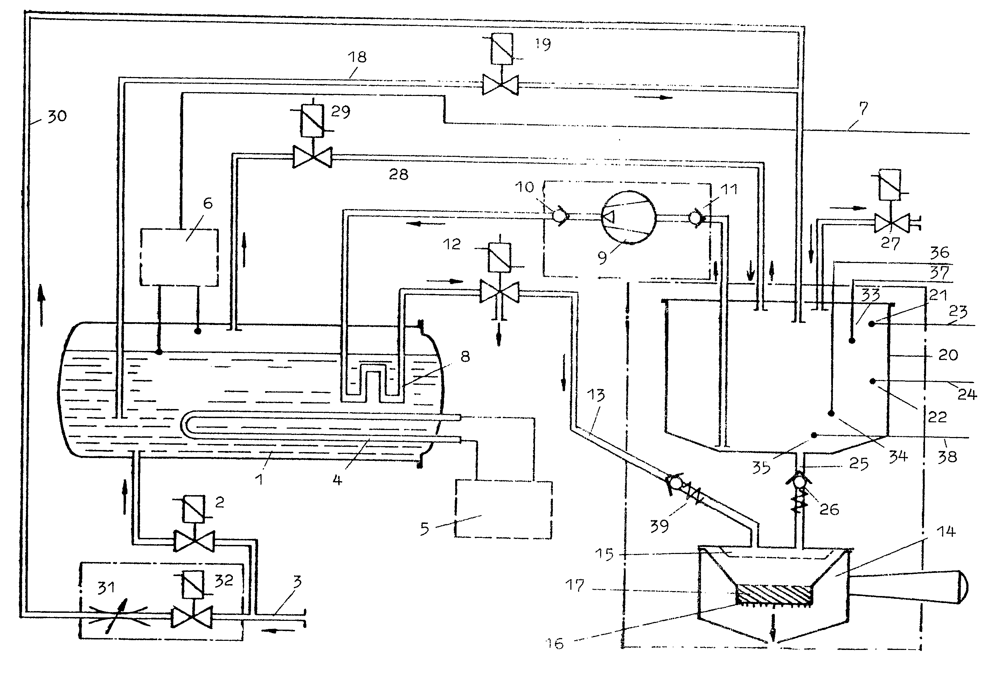

Die Erfindung wird beispielhaft anhand der Zeichnung beschrieben, die ein Prinzipschaltbild der Kaffeemaschine zeigt.

In dem Heißwasserbehälter 1 wird das über das Kaltwasserventil 2 zugeführte Wasser aus der Kaltwasserleitung 3 mittels des Heizkörpers 4 aufgeheizt, der über die Heizungssteuerung 5 gespeist und gesteuert wird. Die Druckniveausteuerung 6 für den Heißwasserkessel ist über die Leitung 7 mit der (nicht dargestellten) Programmsteuerung verbunden. In den Heißwasserkessel 1 ist ein Wärmetauscher 8 für den Hochdruckkaffee eingesetzt. Dem Wärmetauscher ist eine Druckpumpe 9 mit Eingangs- und Ausgangsventilen 10 und 11 vorgeschaltet. Dem Wärmetauscher 8 ist als erstes Steuerventil das Dreiwegeventil 12 nachgeschaltet, das einerseits mit der Leitung 13 über das Rückschlagventil 39 in die gemeinsame Brüharmatur 14 mit Wasserverteiler 15 und Sieb 16 sowie daraufliegendem Kaffeemehl 17 mündet. Das Dreiwegeventil 12 dient andererseits zum Entlüften des Wärmetauschers 8.

Über die Leitung 18 und das zweite Steuerventil 19 wird Heißwasser für den Niederdruckkaffee in den Dosierbehälter 20 gegeben, der mit Elektroden 21 zum Bestimmen der Mengen des Niederdruckkaffees versehen ist. Über die Leitungen 23 und 24 sind die Elektroden mit der Programmsteuerung verbunden. Die Brühleitung 25 für den Niederdruckbetrieb ist als drittes Ventil mit einem Rückschlagventil 26 versehen und mündet ebenfalls in die gemeinsame Brüharmatur 14. Das Ventil 27 dient zum Entlüften des Dosierbehälters 20. Über die Leitung 28 und das Dampfventil 29 wird Dampfdruck zum Einleiten des Brühvorgangs für den Niederdruckkaffee aus dem Heißwasserkessel 1 in den Dosierbehälter 20 gegeben.

Die Leitung 30 ist über einen Mengenregler 31 und ein weiteres Kaltwasserventil 32 mit der Kaltwasserleitung 3 verbunden und fördert Kaltwasser für das Bereiten des Hochdruckkaffees zu dem Dosierbehälter 20. Hierfür ist dieser mit Elektroden 33 und 34 zum Festlegen der Mengen des zu Brühenden Hochdruckkaffees versehen sowie mit einer Minimumelektrode 35. Über die Leitungen 36, 37 und 38 sind die Elektroden mit der gemeinsamen Programmsteuerung verbunden.

Die Funktionsweise der Kaffeemaschine ist wie folgt.

### 1. Zubereitung von Normalkaffee

#### 1.1. Vorwärmen

Durch Drücken einer Taste für Brühkaffee, z. B. für eine Tasse, gibt die Programmsteuerung einen Schaltbefehl an das Dampfventil 29, das die Dampfleitung 28 zwischen Kessel und Dosierbehälter 20 öffnet. Der einströmende Dampf erwärmt das Dosiergefäß und kann über die geöffnete Entlüftungsleitung und das Entlüftungsventil 27 entweichen. Durch diese Maßnahme wird erreicht, daß unterschiedliche Brühmengen die gleiche Brühtemperatur aufweisen.

### 1.2. Dosieren

Über einen nicht dargestellten Temperaturfühler im Dosiergefäß beendet die Programmsteuerung diesen Vorwärmvorgang und schaltet auf Dosieren um. Das zweite Steuerventil 19 öffnet und der Kesselüberdruck fördert solange Heißwasser in das Dosiergefäß 20, bis die Elektrode 22 für eine Tasse erreicht ist.

### 1.3. Brühen

Die Programmsteuerung löst nun folgende Schaltvorgänge aus : Das Ventil 19 schließt und unterbricht den Heißwasserstrom, das Dampfventil 29 öffnet und gibt Treibdampf auf den Dosierbehälter 20, wobei das Entlüftungsventil 27 gleichzeitig die Entlüftungsleitung verschließt.

Das Rückschlagventil 39 sperrt die Hochdruck-Brühleitung 13, da sonst Heißwasser über diesen Weg entweichen könnte.

Durch den Dampfdruck öffnet das Rückschlagventil 26, das die Brühleitung 25 zur Brüharmatur 14 freigibt. Das Kaffeemehl 17 wird nun extrahiert und das fertige Getränk fließt durch das Brühsieb 16 in das darunter befindliche (nicht dargestellte) Gefäß.

### 1.4. Trocknen

Bei Unterschreiten der Minimumelektrode 35 bleibt der Dampfdruck noch solange bestehen, bis das Restwasser durch das Kaffeemehl 17 durchgedrückt ist. In der Schlußphase trocknet der durchströmende Dampf das ausgelaugte Kaffeemehl. Dahl Ventil 27 entlüftet nach Ende des Brühvorgangs das Dosiergefäß 20.

### 2. Espressokaffee

Die Vorwärmfunktion für den Dosierbehälter entfällt bei Espressobetrieb, da die Brühtemperatur im wesentlichen durch den Wärmetauscher 8 bestimmt wird.

### 2.1. Dosieren

Nach Auswahl der benötigten Menge durch die entsprechende Espressotaste, z. B. für zwei Tassen, öffnen die Ventile 32 und 19. Der Dosierbehälter 20 füllt sich mit Mischwasser von ca. 50 °C. Die Temperatur läßt sich mit dem Mengenregler 31 im Kaltwasserkreis auf den gewünschten Wert einstellen.

### 2.2. Brühen

Bei der Ansteuerung für 2 Tassen Espresso schließen nach Berührung der Elektrode 33 die Ventile 32 und 19. Die Programmsteuerung schaltet zum gleichen Zeitpunkt die Espressopumpe 9 sowie das erste Steuerventil 12 ein, so daß die bemessene Wassermenge über den Wärmetauscher 8 nacherhitzt wird und unter Druck über das Rückschlagventil 39 auf das Kaffeemehl 17 trifft. Das andere Rückschlagventil 26 sperrt den Weg zum Dosierbehälter 20, so daß der gesamte Brühdruck auf das Kaffeemehl wirkt.

Sobald die Minimumelektrode 35 keinen Kontakt zum Brühwasser mehr hat, unterbricht die Programmsteuerung den Steuerkreis der Druckpumpe 9.

Ein Trocknungsvorgang durch Dampf sowie ein Entlüften des Brühraums über dem Sieb 16 ist bei Espressobetrieb nicht notwendig, da über dem Kaffeemehl sich durch entsprechende Gestaltung des Siebes nur eine geringe Wassermenge befindet.

**Patentansprüche**

1. Maschine zum Brühen von zwei Arten von Kaffee unter verschiedenen Drücken mit einem Heißwasserkessel (1), einem in dem Kessel angeordneten Wärmetauscher (8), einer dem Wärmetauscher vorgeschalteten Druckpumpe (9), einem dem Wärmetauscher (8) nachgeschalteten ersten Steuerventil (12) und einer diesem Ventil nachgeschalteten Brüharmatur (14) für den Hochdruckkaffee und mit einem Dosierbehälter (20) für den Niederdruckkaffee, dadurch gekennzeichnet, daß

a) der Dosierbehälter (20) unter Zwischenschaltung eines zweiten Steuerventils (19) dem Heißwasserkessel (1) nachgeschaltet ist,

b) in der Niederdruck-Brühleitung (25) des Dosierbehälters (20) ein drittes Ventil (26) liegt,

c) die Niederdruck-Brühleitung (25) in eine für Niederdruck- und Hochdruckkaffee gemeinsame Brüharmatur (14) mündet und

d) die Steuerventile (12, 19) wechselweise betätigbar sind.

2. Maschine nach Anspruch 1, dadurch gekennzeichnet, daß das dritte Ventil ein Rückschlagventil (26) ist.

3. Maschine nach Anspruch 1 oder 2, dadurch gekennzeichnet, daß die Druckpumpe (9) dem Dosierbehälter (20) nachgeschaltet ist.

4. Maschine nach einem der Ansprüche 1 bis 3, dadurch gekennzeichnet, daß das Kaltwasser für die Dosierung im Hochdruckbetreib mit Heißwasser mischbar ist.

5. Maschine nach einem der Ansprüche 1 bis 4, dadurch gekennzeichnet, daß im Hochdruckbetrieb dem Dosierbehälter zusätzlich Dampfdruck zuführbar ist.

6. Maschine nach einem der Ansprüche 1 bis 5, dadurch gekennzeichnet, daß in der Hochdruck-Brühleitung (13) ein weiteres Rückschlagventil (39) liegt.

**Claims**

1. An apparatus for brewing two kinds of coffee with different pressures having a hot-water boiler (1), a heat exchanger (8) provided in the boiler, a pressure pump (9) arranged before the heat exchanger, a first control valve (12) arranged after the heat exchanger and a brewing armature (14) for the high pressure coffee arranged after this valve, and a proportioning store (20) for the low-pressure coffee, characterized in that

a) the proportioning store (20) is arranged after the hot-water boiler (1) by interpositioning a second control valve (19),

b) a third valve (26) is arranged in the low-pressure brewing line (25) of the proportioning store (20),

c) the low-pressure brewing line (25) opens into a brewing armature (14) common for the low-pressure coffee and the high-pressure coffee, and

d) the control valves (12, 19) can be actuated alternately.

2. An apparatus according to claim 1, characterized in that the third valve is a back-pressure valve (26).

3. An apparatus according to claim 1 or 2, characterized in that the pressure pump (9) is connected after the proportioning store (20).

4. An apparatus according to one of the claims 1 to 3, characterized in that the cold water can be mixed with hot water for the proportioning in the high-pressure operation.

5. An apparatus according to one of the claims 1 to 4, characterized in that vapour pressure can be applied additionally to the proportioning store in the high-pressure operation.

6. An apparatus according to one of the claims 1 to 5, characterized in that a further back-pressure valve (39) is provided in the high-pressure brewing line (13).

**Revendications**

1. Appareil qui, destiné à préparer par infusion deux types de café sous des pressions différentes, comprend un chauffe-eau (1), un échangeur de chaleur (8) monté dans le chauffe-eau, une pompe foulante (9) disposée en amont de l'échangeur de chaleur, un premier obturateur commandé (12) disposé en aval de l'échangeur de chaleur (8) et un dispositif d'infusion (14) pour café haute pression situé en aval de cet obturateur ainsi qu'un récipient doseur (20) pour le café basse pression, caractérisé en ce que

a) le récipient doseur (20) est disposé en aval du chauffe-eau (1) avec interposition d'un second obturateur commandé (19),

b) dans le conduit d'infusion basse pression (25) du récipient doseur (20) se trouve un troisième obturateur (26),

c) le conduit d'infusion à basse pression (25) débouche dans un dispositif d'infusion commun (14) pour café basse pression et café haute pression, et

d) les obturateurs commandés (12, 19) peuvent être manœuvrés alternativement.

2. Appareil selon la revendication 1, caractérisé en ce que le troisième obturateur est un clapet de retenue (26).

3. Appareil selon la revendication 1 ou 2, caractérisé en ce que la pompe foulante (9) est montée en aval du récipient doseur (20).

4. Appareil selon l'une quelconque des revendications précédentes, caractérisé en ce que pour le dosage dans le mode de fonctionnement, à haute pression l'eau froide peut être mélangée avec de l'eau chaude.

5. Appareil selon l'une quelconque des revendications précédentes, caractérisé en ce que dans le mode de fonctionnement à haute pression un supplément de vapeur sous pression peut être amené au récipient doseur.

6. Appareil selon l'une quelconque des revendications précédentes, caractérisé en ce qu'un clapet de retenue additionnel (39) est monté dans le conduit d'infusion à haute pression (13).